(19) Europäisches Patentamt / European Patent Office / Office européen des brevets

(11) **EP 1 999 182 B1**

(12) **EUROPÄISCHE PATENTSCHRIFT**

(45) Veröffentlichungstag und Bekanntmachung des Hinweises auf die Patenterteilung:
**26.09.2012 Patentblatt 2012/39**

(51) Int Cl.:
**C08G 65/20** (2006.01)

(21) Anmeldenummer: **07857306.0**

(22) Anmeldetag: **10.12.2007**

(86) Internationale Anmeldenummer:
**PCT/EP2007/063571**

(87) Internationale Veröffentlichungsnummer:
**WO 2008/086919 (24.07.2008 Gazette 2008/30)**

(54) **VERFAHREN ZUR ÄNDERUNG DES VORGEGEBENEN MITTLEREN MOLEKULARGEWICHT Mn BEI DER KONTINUIERLICHEN HERSTELLUNG VON POLYTETRAHYDROFURANEN ODER THF COPOLYMEREN**

METHOD FOR CHANGING THE PREDEFINED MEAN MOLECULAR WEIGHT Mn DURING THE CONTINUOUS PRODUCTION OF POLYTETRAHYDROFURANES OR THF COPOLYMERS

PROCÉDÉ POUR MODIFIER LE POIDS MOLÉCULAIRE MOYEN PRÉDÉFINI Mn LORS DE LA FABRICATION EN CONTINU DE POLYTÉTRAHYDROFURANNES OU DE COPOLYMÈRES DE TÉTRAHYDROFURANNE

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **19.01.2007 EP 07100828**

(43) Veröffentlichungstag der Anmeldung:
**10.12.2008 Patentblatt 2008/50**

(73) Patentinhaber: **BASF SE**
**67056 Ludwigshafen (DE)**

(72) Erfinder:
• **PINKOS, Rolf**
**67098 Bad Dürkheim (DE)**
• **STEINER, Jochen**
**68165 Mannheim (DE)**
• **KÄSHAMMER, Stefan**
**67105 Schifferstadt (DE)**
• **WABNITZ, Tobias**
**68169 Mannheim (DE)**

(56) Entgegenhaltungen:
**EP-A- 0 052 213      WO-A-2004/031260**
**WO-A-2007/141148      DE-A1- 4 316 137**

## Beschreibung

Gegenstand der vorliegenden Erfindung ist ein Verfahren zur Änderung des vorgegebenen mittleren Molekulargewicht $M_n$ bei der kontinuierlichen Herstellung von Polytetrahydrofuran oder Tetrahydrofuran-Copolymeren durch Polymerisation von Tetrahydrofuran in Gegenwart eines Telogens, oder eines Telogens und eines Comonomers an einem sauren Katalysator, bei dem man das Molverhältnis von Telogen zu Tetrahydrofuran ändert, sodann während der Polymerisation das mittlere Molekulargewicht mindestens einer Probe bestimmt, das bereits gebildete Polymer an einem sauren Katalysator zumindest teilweise depolymerisiert und das durch Depolymerisation zurückgewonnene Tetrahydrofuran zumindest teilweise in die Polymerisation zurückführt.

Polytetrahydrofuran (im Folgenden "PTHF"), auch Polyoxybutylenglykol genannt, ist in der Kunststoff- und Kunstfaserindustrie ein vielseitiges Zwischenprodukt und wird unter anderem als Diolkomponente zur Herstellung von Polyurethan-, Polyester- und Polyamid-Elastomeren verwendet. Daneben ist es - wie auch manche seiner Derivate - in vielen Anwendungsfällen ein wertvoller Hilfsstoff, z.B. als Dispergiermittel oder beim Entfärben ("Deinken") von Altpapier.

PTHF wird technisch üblicherweise durch Polymerisation von Tetrahydrofuran (im Folgenden "THF") an geeigneten Katalysatoren in Gegenwart von Reagenzien hergestellt, deren Zugabe die Steuerung der Kettenlänge der Polymerketten und so die Einstellung des mittleren Molekulargewichts $M_n$ ermöglicht (Kettenabbruchreagenzien oder "Telogene"). Die Steuerung erfolgt dabei durch Wahl von Art und Menge des Telogens. Durch Wahl geeigneter Telogene können zusätzlich funktionelle Gruppen an einem Ende oder beiden Enden der Polymerkette eingeführt werden.

So können z.B. durch Verwendung von Carbonsäuren oder Carbonsäureanhydriden als Telogene die Mono- oder Diester von PTHF (im Folgenden "PTHF-Ester") hergestellt werden. Erst durch anschließende Verseifung oder Umesterung entsteht PTHF selbst. Daher wird diese Herstellung als zweistufiges PTHF-Verfahren bezeichnet. PTHF lässt sich auch einstufig durch THF-Polymerisation mit Wasser, 1,4-Butandiol oder niedermolekularem PTHF als Telogen an sauren Katalysatoren herstellen.

Andere Telogene wirken nicht nur als Kettenabbruchreagenzien, sondern werden auch in die wachsende Polymerisatkette von PTHF eingebaut. Sie haben nicht nur die Funktion eines Telogens, sondern sind gleichzeitig ein Comonomer und können daher mit gleicher Berechtigung sowohl als Telogene wie auch als Comonomere bezeichnet werden. Beispiele für solche Comonomere sind Telogene mit zwei Hydroxygruppen, wie die Dialkohole. Dies können beispielsweise Ethylenglykol, propylenglykol, Butylenglykol, 1,3-Propandiol, 1,4-Butandiol, 2-Butin-1,4-diol, 2,2-Dimethyl-1,3-propandiol, 1,6-Hexandiol oder niedermolekulares PTHF sein.

Weiterhin sind als Comonomere cyclische Ether, bevorzugt drei-, vier- und fünfgliedrige Ringe, wie 1,2-Alkylenoxide, z.B. Ethylenoxid oder Propylenoxid, Oxetan, substituierte Oxetane, wie 3,3-Dimethyloxetan, sowie THF-Derivate wie z.B. 2-Methyltetrahydrofuran, 3-Methyltetrahydrofuran, 3,3-Dimethyltetrahydrofuran oder 3,4-Dimethyltetrahydrofuran geeignet.

Die Verwendung solcher Comonomere bzw. Telogene führt mit Ausnahme von Wasser, 1,4-Butandiol und niedermolekularem PTHF zur Herstellung von Tetrahydrofuran-Copolymeren - im Folgenden THF-Copolymere genannt - und ermöglicht es auf diese Weise, PTHF chemisch zu modifizieren.

Großtechnisch werden überwiegend die oben erwähnten zweistufigen Verfahren kontinuierlich durchgeführt, bei denen THF bzw. THF und Comonomere z.B. in Gegenwart von in der Regel heterogenen - d.h. weitgehend ungelöste - Katalysatoren zunächst zu Polytetrahydrofuran-Estern polymerisiert und anschließend zu PTHF hydrolysiert wird. Üblicherweise werden bei dieser Form der THF-Polymerisation höhere THF-Umsätze als bei einstufigen Verfahren erzielt.

PTHF, PTHF-Ester sowie die Ester der THF-Copolymere werden je nach Anwendung von der weiterverarbeitenden Industrie mit unterschiedlicher Molmassen benötigt. Es ist jedoch unwirtschaftlich für jede vom Markt nachgefragte Molmasse eine großtechnische Herstellungsanlage bereitzuhalten. Dies gilt insbesondere dann, wenn die Herstellung kontinuierlich erfolgen soll. Daher erfolgt die Produktion verschiedener Molmassen in der Regel in einer Anlage, die jedoch zur Vermeidung von unerwünschten Mischprodukten bei einer Molmassenumstellung aufwändig entleert, gespült und dann erneut, mit veränderter Rezeptur, wiedergefahren werden muss. Dieses Verfahren ist nicht nur zeitaufwändig, sondern auch ressourcenintensiv. Zudem ist bei den verwendeten festen Polymerisationskatalysatoren bei jedem An- und Abfahren eine Schädigung des Katalysators zu befürchten.

Ausgehend von diesem Stand der Technik lag der vorliegenden Erfindung die Aufgabe zugrunde, ein kontinuierlich zu betreibendes Verfahren bereitzustellen, bei dem Polytetrahydrofuran, Tetrahydrofuran-Copolymere und deren Ester mit unterschiedlicher mittlerer Molmasse $M_n$ nacheinander wirtschaftlich in einer Herstellungsanlage hergestellt werden können ohne dass die vorstehend genannten Nachteile auftreten.

Es wurde nun ein Verfahren zur Änderung des mittleren Molekulargewicht $M_n$ bei der kontinuierlichen Herstellung von Polytetrahydrofuran oder Tetrahydrofuran-Copolymeren, den Mono- oder Diestem des Polytetrahydrofurans oder der Tetrahydrofuran-Copolymere durch Polymerisation von Tetrahydrofuran in Gegenwart eines Telogens, oder eines Telogens und eines Comonomers an einem sauren Katalysator (in einer Herstellungsanlage) gefunden, dadurch gekennzeichnet, dass

a) man das Molverhältnis von Telogen zu Tetrahydrofuran oder von Telogen zu Tetrahydrofuran und Comonomer ändert

b) sodann das mittlere Molekulargewicht mindestens einer Probe bestimmt,

c) solange das so bestimmte mittlere Molekulargewicht von dem durch die Änderung zu erreichenden mittleren Molekulargewicht $M_n$ abweicht, das bereits gebildete Polytetrahydrofuran oder die Tetrahydrofuran-Copolymere , die Mono- oder Diester des Polytetrahydrofurans oder Tetrahydrofuran-Copolymers an einem sauren Katalysator zumindestens teilweise depolymerisiert und

d) das durch Depolymerisation zurückgewonnene Tetrahydrofuran zumindest teilweise in die Polymerisation zurückführt.

Das bis zum erneuten Erreichen des stationären Zustands, das heisst bis zur stabilen Einstellung des neuen vorgegebenen Molekulargewichts $M_n$", anfallende PTHF, die anfallenden THF-Copolymere bzw. deren anfallende Ester werden depolymerisiert und rückgeführt. Dieses Vorgehen erlaubt es, nahezu verlustfrei THF und sowie Comonomere in die Polymerisation rückzuführen und so die Stoffkosten klein zu halten. Das neue Verfahren erlaubt eine besonders wirtschaftliche Malgewichtsumstellung bei der Herstellung dieser Polymere.

Die Polymerisation ist an sich bekannt und beispielsweise in DE-A 1 226560, DE-A 19 755 415 und DE-A 29 16 653 beschrieben. Sie wird im Allgemeinen bei Temperaturen von 0 bis 100°C, vorzugsweise von 20°C bis zur 70°C, durchgeführt, wobei die Reaktionstemperatur so verstanden wird, dass sie der jeweiligen Temperatur der Polymerisationsmischung entspricht.

Der angewandte Druck ist in der Regel für das Ergebnis der Polymerisation nicht kritisch, weshalb im Allgemeinen bei Atmosphärendruck oder unter dem Eigendruck des Polymerisationssystems gearbeitet wird. Ausnahmen hiervon bilden Copolymerisationen von THF mit den leichtflüchtigen 1,2-Alkylenoxiden, die vorteilhafterweise unter Druck ausgeführt werden. Üblicherweise beträgt der Druck 0,1 bis 10 bar, bevorzugt 0,9 bis 3 bar.

Das erfindungsgemäße Verfahren ermöglicht es, PTHF und THF-Copolymere sowie deren Ester mit vorgegeben, aber wechselndem mittleren Molekulargewicht und mit einem höheren Umsatz des Telogens bei konstanter Produktqualität in einer Herstellungsanlage zu gewinnen. Eine verbesserte Verwertung des Telogens und/oder Comonomers trägt zu einer ökonomischen Verwertung von Rohstoffen bei und führt zu einem wirtschaftlicheren Verfahren.

Bei dem erfindungsgemäßen Herstellungsverfahren für PTHF und THF-Copolymere wird in einem ersten Schritt ein Mono- und/oder Diester des PTHF's bzw. der THF Copolymere durch Polymerisation von THF bevorzugt in Gegenwart von Essigsäureanhydrid und gegebenenfalls Comonomeren an sauren, bevorzugt heterogenen Katalysatoren, hergestellt.

Geeignete Katalysatoren sind beispielsweise Katalysatoren auf Basis von Bleicherden wie sie beispielsweise in DE-A 1 226 560 beschrieben sind. Bleicherden, insbesondere auch aktivierte Montmorillonite, können als Formkörper im Festbett oder in Suspension verwendet werden.

Weiterhin sind Katalysatoren auf Basis gemischter Metalloxide, insbesondere der Gruppen 3, 4, 13 und 14 des Periodensystems der Elemente, für die Polymerisation von THF bekannt. So beschreibt die JP-A 04-306 228 die Polymerisation von THF in Gegenwart eines Carbonsäureanhydrids an einem gemischten Metalloxid bestehend aus Metalloxiden der Formel $M_xO_y$ mit ganzzahligen x und y im Bereich 1-3. Genannt werden als Beispiele $Al_2O_3$-$SiO_2$, $SiO_2$-$TiO_2$, $SiO_2$-$ZrO_2$ und $TiO_2$-$ZrO_2$. Heteropolysäuren, insbesondere $H_3PW_{12}O_{40}$ und $H_3PMo_{12}O_{40}$ können auf einem Träger, bevorzugt jedoch ungeträgert als Katalysatoren eingesetzt werden.

Die US 5,208,385 offenbart Katalysatoren auf Basis amorpher Silicium/Aluminium-Mischoxide. Auch Mischoxide auf Basis $SnO_2$/$SiO_2$, $Ga_2O_3$/$SiO_2$, $Fe_2O_3$/$SiO_2$, $In_2O_3$/$SiO_2$, $Ta_2O_5$/$SiO_2$ und $HfO_2$/$SiO_2$ sind bekannt. Die vorgenannten Katalysatoren werden bevorzugt durch Copräzipitation/Sol-Gel-Methoden hergestellt. Trägerkatalysatoren sind in der DE-A 44 33 606 offenbart, wobei Wolfram- oder Molybdänoxide auf z.B. $ZrO_2$, $TiO_2$, $HfO_2$, $Y_2O_3$, $Fe_2O_3$, $Al_2O_3$, $SnO_2$, $SiO_2$ oder ZnO aufgebracht werden. Weiterhin werden $ZrO_2$/$SiO_2$-Katalysatoren empfohlen, bei denen der Träger eine Alkalimetall-Konzentration < 5000 ppm aufweist.

Katalysatoren auf Basis saurer Ionentauscher sind in US 4,120,903 für die Polymerisation von THF, insbesondere alpha-Fluorsulfonsäure enthaltende Polymere (beispielsweise Nafion®), in Gegenwart von Essigsäureanhydrid beschrieben. Weiterhin sind Katalysatoren, die ein Metall und Perfluoralkylsulfonsäure-Anionen enthalten für die THF-Polymerisation geeignet.

Daneben sind als Polymerisationskatalysatoren noch weitere gegebenenfalls aktivierte Tonmineralien bekannt, offenbart beispielsweise in der WO 94/05719, WO 96/23833. WO 98/51729, WO 99/12992 und DE-A 195 134 93. Auch Zeolithe sind als Katalysatoren geeignet und werden beispielsweise in DE-A 43 16 138 beschrieben. Schließlich sind noch sulfatisierte Zirkonoxide, sulfatisierte Aluminiumoxide, geträgerte Heteropolysäuren und geträgertes Ammoniumbifluorid ($NH_4F$*HF) oder Antimonpentafluorid als geeignete Polymerisationskatalysatoren bekannt. Bevorzugt wird das erfindungsgemä-βe Verfahren mit aktivierten Bleicherden durchgeführt.

Als Vorbehandlung des Katalysators kommt beispielsweise das Trocknen mit auf 80 bis 200°C, bevorzugt auf 100 bis 180°C erwärmten Gasen, wie z.B. Luft oder Stickstoff, in Frage.

For die Verwendung als homogene Polymerisationskatalysatoren sind Heteropolysäuren geeignet. Die Polymerisation bzw. Copolymerisation des THF's in Gegenwart von Heteropolysäuren als Katalysator erfolgt in an sich bekannter Weise, wie sie zum Beispiel in EP-A 126 471 beschrieben ist. Heteropolysäuren, die erfindungsgemäß verwendet werden, sind anorganische Polysäuren, die im Gegensatz zu Isopolysäuren mindestens zwei verschiedene Zentralatome besitzen. Heteropolysäuren entstehen aus jeweils schwachen mehrbasigen Sauerstoffsäuren eines Metalles, wie Chrom, Molybdän, Vanadium und Wolfram sowie eines Nichtmetalles, wie Arsen, Jod, Phosphor, Selen, Silizium, Bor und Tellur als partielle gemischte Anhydride. Als Beispiele seine die Dodecawolframphosphorsäure $H_3(PW_{12}O_{40})$ oder die Decamolybdophosporsäure $H_3(PMo_{12}O_{40})$ genannt. Die Heteropolysäuren können als zweites Zentralatom auch Aktinoide oder Lanthanoide enthalten (Z. Chemie 17 (1977), Seiten 353 bis 357 bzw. 19 (1979), 308). Die Heteropolysäuren können allgemein durch die Formel $H_{8-n}(Y^n M_{19}O_{40})$ mit n = Wertigkeit des Elementes Y (z.B. Bor, Silizium, Zink) beschrieben werden (s. auch Heteropoly- und Isopoly-oxamtalates, Berlin; Springer 1983). Für das erfindungsgemäße Verfahren sind als Katalysatoren Phosphorwolframsäure, Phosphormolybdänsäure, Siliziummolybdänsäure und Siliziumwolframsäure besonders gut geeignet. Dodecawolframatophosphorsäure und/oder Decamolybdatophosphorsäure sind bevorzugt. Weitere homogene Polymerisationskatalysatoren sind beispielsweise Fluorsulfonsäuren oder Perchlorsäure.

Zur Vermeidung der Bildung von Etherperoxiden wird die Polymerisation vorteilhaft unter einer Inertgasatmosphäre vollzogen. Als Inertgase können z.B. Stickstoff, Kohlendioxid oder die Edelgase dienen, bevorzugt wird Stickstoff verwendet.

Das Verfahren wird aus wirtschaftlichen Gründen kontinuierlich betrieben.

Da Telogene zum Kettenabbruch führen, lässt sich über die eingesetzte Telogenmenge das mittlere Molekulargewicht des herzustellenden Polymers steuern. Als Telogen eignen sich $C_2$- bis $C_{12}$-Carbonsäureanhydride und/oder Gemische von Protonsäuren mit $C_2$- bis $C_{12}$-Carbonsäureanhydrid. Die Protonsäuren sind bevorzugt organische oder anorganische Säuren, die im Reaktionssystem löslich sind. Beispiele sind $C_2$- bis $C_{12}$-Carbonsäuren wie Essigsäure oder Sulfonsäuren, Schwefelsäure, Salzsäure, Phosphorsäure. Bevorzugt werden Essigsäureanhydrid und/oder Essigsäure verwendet. Im ersten Schritt, der Polymerisation, werden daher Mono- und Diester des PTHF's oder der THF-Copolymere gebildet.

Die Konzentration des als Telogen eingesetzten Essigsäureanhydrids in dem Polymerisationsreaktor zugeführten Eduktgemisch (Feed) liegt zwischen 0,03 bis 30 mol-%, bevorzugt bei 0,05 bis 20 mol-%, besonders bevorzugt bei 0,1 bis 10 mol-%. bezogen auf das eingesetzte THF. Wird zusätzlich Essigsäure verwendet, so beträgt das Molverhältnis im Feed der laufenden Polymerisation üblicherweise 1 : 20 bis 1 : 20000, bezogen auf eingesetztes Essigsäureanhydrid.

Soll mit dem erfindungsgemäßen Verfahren ein bestimmtes mittleres Molekulargewicht $M_n$ eingestellt werden, so wird der Molenbruch von Essigsäureanhydrid im Zulauf durch die folgende Formel I errechnet

$$X_{Ac} = \frac{72\,g/mol \bullet U_{THF}}{(M_{PTHF} - 18\,g/mol) \bullet U_{Ac} + 72\,g/mol \bullet U_{THF}} \qquad \text{(I)}$$

mit

$X_{AC}$      Molenbruch Essigsäureanhydrid im Zulauf
$U_{THF}$      Umsatz THF
$U_{AC}$      Umsatz Essigsäureanhydrid
$M_{PTHF}$      Zielmolekulargewicht PTHF [g/mol]

Soll beispielsweise bei einem THF-Umsatz von 50% und einem Essigsäureanhydrid-Umsatz von 90% ein Polymer mit der Molmasse 2000 g/mol erhalten werden, muss der Molenbruch Essigsäureanhydrid im Polymerisationszulauf gemäß Formel (I) 0,020 betragen.

Für Copolymerisationen mit Essigsäureanhydrid, THF und mindestens einem Comonomer können Formel (I) entsprechende Formeln ausgestellt werden.

Alternativ zum Molenbruch kann auch das Molverhältnis Essigsäureanhydrid zu THF verwendet werden, welches sich nach $X_{Ac}/(1-X_{Ac})$ berechnen lässt

Die Mono- und Diester der THF-Copolymere lassen sich herstellen durch die zusätzliche Verwendung von cyclischen Ethern als Comonomere, die sich ringöffnend polymerisieren lassen, bevorzugt drei-, vier- und fünfgliedrige Ringe, wie 1,2-Alkylenoxide, z.B. Ethylenoxid oder Propylenoxid, Oxetan, substituierte Oxetane, wie 3,3-Dimethyloxetan, die THF-Derivate 2-Methyltetrahydrofuran oder 3-Methyltetrahydrofuran, wobei 2-Methyltetrahydrofuran oder 3-Methyltetrahydrofuran besonders bevorzugt sind. Ebenso ist die Verwendung von $C_2$- bis $C_{12}$-Diolen als Comonomere möglich. Dies können beispielsweise Ethylenglykol, Propylenglykol, Butylenglykol, Neopentylglykol, 1,3-Propandiol, 2-Butin-1,4-diol, 1,6-Hexandiol oder niedermolekulares PTHF sein.

In der erfindungsgemäßen Festbettfahrweise kann der Polymerisationsreaktor in Sumpffahrweise, d. h. das Reaktionsgemisch wird von unten nach oben geführt, oder in Rieselfahrweise, d. h. das Reaktionsgemisch wird von oben nach unten durch den Reaktor geführt, betrieben werden. Das Eduktgemisch (Feed) aus THF und Telogen und/oder Comonomer wird dem Polymerisationsreaktor kontinuierlich zugeführt, wobei die Katalysatorbelastung 0,01 bis 2,0 kg THF/(1*h), bevorzugt 0,02 bis 1,0 kg THF/(1*h) und besonders bevorzugt 0,04 bis 0,5 kg THF/(1*h) beträgt.

Weiterhin kann der Polymerisationsreaktor im geraden Durchgang, d. h. ohne Produktrückführung, oder im Umlauf, d. h. ein Teil des den Reaktor verlassenden Polymerisationsgemischs wird im Kreislauf geführt, betrieben werden. Bei der Umlauffahrweise beträgt das Verhältnis von Umlauf zu Zulauf kleiner oder gleich 150 : 1, bevorzugt kleiner 100 : 1 und bevorzugt kleiner 60 : 1.

Der THF-haltige Austrag aus der Polymerisationsstufe wird filtriert, um Spuren des Polymerisationskatalysators zurückzuhalten und im Anschluss der destillativen THF-Abtrennung zugeführt. Es kann jedoch auch zuerst nicht umgesetztes THF abgetrennt werden und dann die verbleibenden Mono- oder Diester des PTHFs von Katalysatorrückständen durch Filtration befreit werden. Als Filtereinrichtungen werden beispielsweise industriell übliche Schichtenfilter verwendet. Nicht umgesetztes THF wird in die Polymerisation zurückgeführt.

Die Estergruppen in den so erhaltenen Polymeren müssen in einem zweiten Schritt umgewandelt werden. Eine übliche Methode stellt die durch alkalische Katalysatoren initiierte Umsetzung mit niederen Alkoholen dar. Die Umesterung mit alkalischen Katalysatoren ist aus dem Stand der Technik bekannt und beispielsweise in DE-A 101 20 801 und DE-A 197 42 342 beschrieben. Bevorzugt wird Methanol als niederer Alkohol und als wirksamer Umesterungskatalysator Natriummethylat verwendet.

Je nach Telogengehalt der Polymerisationsmischung lassen sich mit dem Verfahren Mono- und/oder Diester des PTHF oder der THF-Copolymere mit mittleren Molekulargewichten von 250 bis 10000 Dalton gezielt herstellen, vorzugsweise werden mit dem erfindungsgemäßen Verfahren die betreffenden PTHF-Ester mit mittleren Molekulargewichten von 500 bis 5000 Dalton, besonders bevorzugt 650 bis 4000 Dalton hergestellt.

Unter der Bezeichnung "mittleres Molekulargewicht" oder "mittlere Molmasse" wird in dieser Anmeldung das Zahlenmittel $M_n$ des Molekulargewichts der Polymere verstanden, dessen Bestimmung z.B. durch nasschemische OH-Zahlbestimmung nach DIN 53 240, oder entsprechend der in dieser Anmeldung beschriebenen Methode erfolgt. Die Probenentnahme und die Bestimmung des mittleren Molekulargewichts erfolgt während der laufenden Polymerisation und kann direkt aus dem Polymerisationsreaktor erfolgen. Es ist jedoch auch möglich, das mittlere Molekulargewicht nach der Abspaltung der Estergruppen (Umesterung) zu bestimmen.

Ergibt die Bestimmung des mittleren Molekulargewichts der Probe, dass das durch die Molgewichtsumstellung zu erreichende mittlere Molekulargewicht noch nicht erreicht ist, werden bereits gebildetes Polytetrahydrofuran oder die Tetrahydrofuran-Copolymere , die Mono- oder Diester des Polytetrahydrofurans oder Tetrahydrofuran-Copolymere depolymerisiert. Für die Rückspaltung der Polymere (Depolymerisation) werden saure Katalysatoren, bevorzugt die vorstehend als für Polymerisation geeignet genannten Katalysatoren verwendet. Bevorzugt wird die in einem gesonderten Reaktor durchgeführte Depolymerisation an dem auch zur Polymerisation verwendeten Katalysator durchgeführt. Im Falle von fest angeordneten Katalysatoren kann dies in einem Festbettreaktor oder einer Kolonne mit fest eingebautem Katalysator geschehen. Bevorzugt ist allerdings im Falle von festen Katalysatoren, diese suspendiert einzusetzen, beispielsweise in Rührreaktoren mit aufgesetzter Kolonne. Sofern homogen lösliche Katalysatoren eingesetzt werden, ist ein durchmischter Reaktor ebenfalls bevorzugt. Die Depolymerisation des Polytetrahydrofurans oder der Tetrahydrofuran-Copolymere, der Mono- oder Diester des Polytetrahydrofurans oder Tetrahydrofuran-Copolymere wird in der Regel zwischen 0,1 und 10 bar (absolut), bevorzugt bei 0,7 bis 3 bar und bei Temperaturen zwischen 60 und 300 °C, bevorzugt zwischen 100 und 250 °C, besonders bevorzugt zwischen 130 und 220°C durchgeführt. Die Depolymerisation wird, wenn die Ester des Polytetrahydrofurans oder Tetrahydrofuran-Copolymere depolymerisiert werden sollen, bevorzugt in Gegenwart von 0,0001 bis 10 Gew.-%, besonders bevorzugt 0.0001 bis 1 Gew.-%, Wasser, bezogen auf die Ester des Polytetrahydrofurans oder Tetrahydrofuran-Copolymere, durchgeführt.

Die Reaktionsausträge der Depolymerisation, Tetrahydrofuran, und bei Depolymerisation der THF-Copolymere und deren Estern Comonomer, werden im Allgemeinen destillativ gewonnen und können ganz oder teilweise, bevorzugt zu einem Gewichtanteil von mindestens 80 Gew.-%, in die Polymerisation zurückführt werden. Im Fall der Herstellung von THF-Copolymeren und deren Estern wird besonders bevorzugt das bei der Depolymerisation ebenfalls anfallenden Comonomer ganz oder teilweise, bevorzugt mindestens 80 Gew.-%, zusammen mit dem THF in die Polymerisation zurückgeführt.

THF wird bevorzugt vor seiner Rückführung in die Polymerisation von eventuell vorhandenen Leichtsiedem wie beispielsweise. 2,3-Dihydrofuran, Acrolein und Butadien. befreit. Das durch Depolymerisation wiedergewonnene THF kann dabei bevorzugt in die gleiche Destillation eingeschleust werden, in der auch das im Polymerisationsprozess nicht umgesetzte rückgeführte THF destilliert wird.

Die durch das erfindungsgemäße Verfahren erhaltenen Polymere können durch Umsetzung mit organischen Isocyanaten in an sich bekannter Weise zur Polyurethan- und Polyurethanharnstoffherstellung insbesondere zur Herstellung von thermoplastischen Urethanen, Spandex, thermoplastischen Etherestem oder Copolyetheramiden, verwendet werden.

Dabei wird in an sich bekannter Weise PTHF oder ein THF-Copolymer zunächst mit einem organischen Diisocyanat im Überschuss und dann mit einem organischen Diamin umgesetzt wie dies beispielsweise in der JP-A 07-278 246 beschrieben ist.

Das nachfolgende Beispiel soll die Erfindung näher erläutern, aber nicht einschränken.

Beispiele

Molekulargewichtsbestimmung

Das mittlere Molekulargewicht $M_n$, in Form des Zahlenmittel des Molekulargewichtes, definiert als die Masse aller PTHF-Moleküle dividiert durch ihre Menge in Mol, wird durch die Bestimmung der Hydroxylzahl in Polytetrahydrofuran bestimmt. Unter der Hydroxylzahl wird diejenige Menge an Kaliumhydroxid in mg verstanden, die der bei der Acetylierung von 1 g Substanz gebundenen Menge Essigsäure äquivalent ist. Die Hydroxylzahl wird bestimmt durch die Veresterung der vorhandenen Hydroxylgruppen mit einem Überschuss an Essigsäureanhydrid.

$$H\text{-}[O(CH_2)_4]_n\text{-}OH + (CH_3CO)_2 \rightarrow CH_3CO\text{-}[O(CH_2)_4]_n\text{-}O\text{-}COCH_3 + H_2O$$

Nach der Umsetzung wird das überschüssige Essigsäureanhydrid gemäß folgender Reaktionsgleichung mit Wasser hydrolysiert

$$(CH_3CO)_2O + H_2O \rightarrow 2\ CH_3COOH$$

und als Essigsäure mit Natronlauge zurücktitriert.

Beispiel 1

Ein THF/Essigsäureanhydrid-Gemisch wurde mit einem Mol-Verhältnis von 1 zu 0,024 kontinuierlich an dem Bentoniten K-Katalysator K 306 der Firma-Südchemie AG; München, analog Beispiel 1 b der DE-A 2 916 653 bei 40°C und 1050 mbar (absolut) unter Stickstoff als Inertgas bei einer Verweilzeit von 5 Stunden umgesetzt. Der Reaktionsaustrag wurde destillativ bei 1,5 bar/130 °C Sumpftemperatur in einen hochsiedenden Teil, der überwiegend aus PTHF-Diacetat besteht, und einen Leichtsiederteil, der überwiegend aus THF besteht, getrennt.

Das erhaltene PTHF-Diacetat wurde in Methanol mit (ca. 0,1 Gew.% bezogen auf den Gesamtansatz) Natriummethylat zu Methylacetat und PTHF umgeestert. Nach Abtrennen der Natriumionen mittels eines sauren Ionentauschers (Lewatit der Firma Lanxess wurde PTHF bei Temperatur/Druck destillativ von Methylacetat und überschüssigem Methanol befreit. Das mittlere Molekulargewicht des erhaltenen PTHF lag bei 2000. Das bei der Polymerisation nicht umgesetzte THF wurde in einer Destillationseinheit von Essigsäureanhydrid und Essigsäure befreit und wieder in den Polymerisationsprozess eingeschleust.

Nach Betrieb des Reaktors von 4 Wochen wurde das Mol-Verhältnis von THF zu Essigsäureanhydrid auf 1 zu 0,065 umgestellt. Wiederholte Probennahmen und die Bestimmung des mittleren Molekulargewichts ergab, dass innerhalb von 3 Tage das mittlere Molgewicht des resultierenden PTHFs kontinuierlich auf 1000 fiel, um dann bei einem Weiterbetrieb über 4 Wochen konstant zu bleiben. Das während der drei Tage gesammelte PTHF wurde in einem Rührreaktor bei Normaldruck und Temperaturen von 180 - 200°C an dem schon für die Polymerisation verwendeten Bentoniten (K-Katalysator K 306 der Firma-Südchemie AG; München) allerdings in Pulverform umgesetzt, wobei PTHF in den Sumpf des Reaktors kontinuierlich eingeleitet und entstehendes THF über eine aufgesetzte Kolonne abdestilliert wurde. Dabei wurden etwa 1 kg PTHF/0,1 kg Katalysator x h umgesetzt. Die Ausbeute an THF war praktisch quantitativ. Das so erhaltene THF wurde vollständig in die Polymerisation zurückgeführt, ohne dass sich anschließend unerwünschte Eigenschaftsänderungen bei dem hergestellten PTHF gezeigt hätten. Auch die Aktivität des Polymerisationskatalysators ließ nicht nach.

Mit dieser Rückspaltung von unerwünschten Molmassen zwischen 2000 und 1000 lag die PTHF-Ausbeute bezogen auf THF bei > 99%. Ohne die Rückspaltung der unerwünschten Molmassen wäre eine Ausbeute von unter 95% erzielt worden, was für einen großtechnischen Prozess nennenswert erhöhte Stoffkosten bedeuten würde.

Beispiel 2

Die Polymerisation von THF wurde analog Beispiel 1 durchgeführt, die Rückspaltung des bei der Molgewichtsumstellung anfallenden PTHFs wurde mit pulverförmigem sauren Aluminiumoxid bei 190 - 210°C mit dem gleichen Ergebnis wie in Beispiel 1 durchgeführt. Mit dieser Rückspaltung von unerwünschten Molmassen zwischen 2000 und 1000 lag die PTHF-Ausbeute bezogen auf THF bei > 99 %

Beispiel 3

Die Polymerisation von THF wurde analog Beispiel 1 durchgeführt, die Rückspaltung des bei der Molgewichtsumstellung anfallenden PTHFs wurde an saurem Siliciumdioxidpulver bei 190 - 210 °C mit dem gleichen Ergebnis wie in Beispiel 1 durchgeführt. Mit dieser Rückspaltung von unerwünschten Molmassen zwischen 2000 und 1000 lag die PTHF-Ausbeute bezogen auf THF bei > 99%.

Beispiel 4

Die Polymerisation von THF wurde analog Beispiel 1 durchgeführt, die Rückspaltung des bei der Molgewichtsumstellung anfallenden PTHFs wurde an einem saurer Ionentauscher Amberlyst XN 1010 der Firma Rohm und Haas bei 130°C mit dem gleichen Ergebnis wie In Beispiel 1 durchgeführt. Mit dieser Rückspaltung von unerwünschten Molmassen zwischen 2000 und 1000 lag die PTHF-Ausbeute bezogen auf THF bei > 99%.

Beispiel 5

Die Polymerisation von THF wurde analog Beispiel 1 durchgeführt, die Rückspaltung des bei der Molgewichtsumstellung anfallenden PTHFs wurde mit Wolframatophosphorsäure bei 150 - 160°C bei einer Katalysatorbelastung von 1000 kg PTHF/1 kg Katalystor x h mit dem gleichen Ergebnis wie in Beispiel 1 durchgeführt. Mit dieser Rückspaltung von unerwünschten Molmassen zwischen 2000 und 1000 lag die PTHF-Ausbeute bezogen auf THF bei > 99%.

Beispiel 6

Analog Beispiel 1 wurde PTHF-Diacetat hergestellt und destillativ unter den in Beispiel 1 beschriebenen Bedingungen von Leichtsiedem befreit. Das nach Wechsel des Molverhältnisses THF zu Essigsäureanhydrid von 1 : 0,024 auf 1 : 0,065 anfallende Diacetat wurde 3 Tage lang gesammelt und bei Normaldruck und Temperaturen von 180 - 200°C an dem Bentoniten K-Katalysator K 306 der Firma-Südchemie AG; München in Pulverform umgesetzt, wobei PTHF-Diacetat in den Sumpf des Reaktors kontinuierlich eingeleitet und entstehendes THF über eine aufgesetzte Kolonne abdestilliert wurde. Dabei wurden etwa 1 kg PTHF-Diacetat/0,1 kg Katalysator x h umgesetzt. Die Ausbeute an THF war nahezu quantitativ. Nach destillativer Abtrennung von Hochsiedern wie Essigsäure und Butandioldiacetat wurde THF in die Polymerisation zurückgeführt.

**Patentansprüche**

1. Verfahren zur Änderung des mittleren Molekulargewicht $M_n$ bei der kontinuiertichen Herstellung von Polytetrahydrofuran oder Tetrahydrofuran-Copolymeren, den Mono- oder Diestern des Polytetrahydrofurans oder der Tetrahydrofuran-Copolymere durch Polymerisation von Tetrahydrofuran in Gegenwart eines Telogens, oder eines Telogens und eines Comonomers an einem sauren Katalysator, **dadurch gekennzeichnet, dass**

   a) man das Molverhältnis von Telogen zu Tetrahydrofuran oder von Telogen zu Tetrahydrofuran und Comonomer ändert
   b) sodann das mittlere Molekulargewicht mindestens einer Probe bestimmt,
   c) solange das so bestimmte mittlere Molekulargewicht von dem durch die Änderung zu erreichenden mittleren Molekulargewicht $M_n$ abweicht, das bereits gebildete Polytetrahydrofuran oder die Tetrahydrofuran-Copolymere , die Mono- oder Diester des Polytetrahydrofurans oder Tetrahydrofuran-Copolymers an einem sauren Katalysator zumindestens teilweise depolymerisiert und
   d) das durch Depolymerisation zurückgewonnene Tetrahydrofuran zumindest teilweise in die Polymerisation zurückführt.

2. Verfahren nach Anspruch 1, **dadurch gekennzeichnet, dass** das durch Depolymerisation zurückgewonnene Tetrahydrofuran vor der Rückführung von Leichtsiedern und/oder Hochsiedem befreit wird.

**3.** Verfahren nach einem der Ansprüche 1 oder 2, **dadurch gekennzeichnet, dass** für die Polymerisation und die Depolymerisation der gleiche Katalysator verwendet wird.

**4.** Verfahren nach einem der Ansprüche 1 bis 3, **dadurch gekennzeichnet, dass** der Katalysator ausgewählt ist aus Bleicherden, gemischten Metalloxiden der Gruppen 3, 4, 13 und 14 des Periodensystems der Elemente, geträgerten Wolfram - oder Molybdänoxiden, sauren Ionenaustauschern, Zeolithen und/oder sulfatisierten Zirkonoxiden.

**5.** Verfahren nach einem der Ansprüche 1 bis 4, **dadurch gekennzeichnet, dass** die Depolymerisation des Polytetrahydrofurans oder der Tetrahydrofuran-Copolymere , der Mono- oder Diester des Polytetrahydrofurans oder der Tetrahydrofuran-Copolymere bei 0,1 bis 10 bar und Temepraturen von 60 bis 300°C durchgeführt wird.

**6.** Verfahren nach einem der Ansprüche 1 bis 5, **dadurch gekennzeichnet, dass** Depolymerisation des Diester des Polytetrahydrofurans oder der Tetrahydrofuran-Copolymere in Gegenwart von Wassser durchgeführt wird.

**7.** Verfahren nach einem der Ansprüche 1 bis 6, **dadurch gekennzeichnet, dass** als Telogen Essigsäuranhydrid verwendet wird.

**Claims**

**1.** A process for changing the mean molecular weight $M_n$ in the continuous preparation of polytetrahydrofuran or tetrahydrofuran copolymers, the mono- or diesters of polytetrahydrofuran or of tetrahydrofuran copolymers by polymerizing tetrahydrofuran in the presence of a telogen, or of a telogen and of a comonomer over an acidic catalyst, which comprises

a) changing the molar ratio of telogen to tetrahydrofuran or of telogen to tetrahydrofuran and comonomer,
b) then determining the mean molecular weight of at least one sample,
c) until the mean molecular weight thus determined differs from the mean molecular weight $M_n$ to be achieved by the change, at least partly depolymerizing the already formed polytetrahydrofuran or the tetrahydrofuran copolymers, the mono- or diesters of polytetrahydrofuran or tetrahydrofuran copolymer over an acidic catalyst and
d) recycling the tetrahydrofuran recovered by depolymerization at least partly into the polymerization.

**2.** The process according to claim 1, wherein the tetrahydrofuran recovered by depolymerization is freed of low boilers and/or high boilers before the recycling.

**3.** The process according to either of claims 1 and 2, wherein the same catalyst is used for the polymerization and the depolymerization.

**4.** The process according to any of claims 1 to 3, wherein the catalyst is selected from bleaching earths, mixed metal oxides of groups 3, 4, 13 and 14 of the periodic table of the elements, supported tungsten oxides or molybdenum oxides, acidic ion exchangers, zeolites and/or sulfated zirconium oxides.

**5.** The process according to any of claims 1 to 4, wherein the depolymerization of the polytetrahydrofuran or of the tetrahydrofuran copolymers, of the mono- or diesters of the polytetrahydrofuran or of the tetrahydrofuran copolymers is performed at from 0.1 to 10 bar and temperatures of from 60 to 300°C.

**6.** The process according to any of claims 1 to 5, wherein depolymerization of the diester of the polytetrahydrofuran or of the tetrahydrofuran copolymers is performed in the presence of water.

**7.** The process according to any of claims 1 to 6, wherein the telogen used is acetic anhydride.

**Revendications**

**1.** Procédé pour la modification du poids moléculaire moyen $M_n$ lors de la préparation continue de polytétrahydrofuranne ou de copolymères de tétrahydrofuranne, des monoesters ou des diesters du polytétrahydrofuranne ou des copolymères de tétrahydrofuranne par polymérisation de tétrahydrofuranne en présence d'un télogène ou d'un télogène et d'un comonomère sur un catalyseur acide, **caractérisé en ce qu'**on

a) modifie le rapport molaire de télogène à tétrahydrofuranne ou de télogène à tétrahydrofuranne et à comonomère

b) détermine ensuite le poids moléculaire moyen au moyen d'un échantillon,

c) tant que le poids moléculaire moyen ainsi déterminé s'écarte du poids moléculaire moyen $M_n$ à atteindre par la modification, dépolymérise au moins partiellement le polytétrahydrofuranne ou les copolymères de tétrahydrofuranne, les monoesters ou les diesters du polytétrahydrofuranne ou des copolymères de tétrahydrofuranne sur un catalyseur acide et

d) recycle au moins partiellement le tétrahydrofuranne récupéré par dépolymérisation dans la polymérisation.

2. Procédé selon la revendication 1, **caractérisé en ce que** le tétrahydrofuranne récupéré par la dépolymérisation est libéré avant le recyclage des substances à bas et/ou à haut point d'ébullition.

3. Procédé selon l'une quelconque des revendications 1 ou 2, **caractérisé en ce qu'**on utilise le même catalyseur pour la polymérisation et la dépolymérisation.

4. Procédé selon l'une quelconque des revendications 1 à 3, **caractérisé en ce que** le catalyseur est choisi parmi les terres de blanchiment, les oxydes de métaux mixtes des groupes 3, 4, 13 et 14 du système périodique des éléments, les oxydes de tungstène ou de molybdène supportés, les échangeurs d'ions acides, les zéolithes et/ou les oxydes de zirconium sulfatés.

5. Procédé selon l'une quelconque des revendications 1 à 4, **caractérisé en ce que** la dépolymérisation du polytétrahydrofuranne ou des copolymères de tétrahydrofuranne, des monoesters ou des diesters du polytétrahydrofuranne ou des copolymères de tétrahydrofuranne est réalisée à 0,1 à 10 bars et à des températures de 60 à 300°C.

6. Procédé selon l'une quelconque des revendications 1 à 5, **caractérisé en ce que** la dépolymérisation du diester du polytétrahydrofuranne ou des copolymères de tétrahydrofuranne est réalisée en présence d'eau.

7. Procédé selon l'une quelconque des revendications 1 à 6, **caractérisé en ce qu'**on utilise de l'anhydride de l'acide acétique comme télogène.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 1226560 A
- DE 19755415 A
- DE 2916653 A
- JP 4306228 A
- US 5208385 A
- DE 4433606 A
- US 4120903 F
- WO 9405719 A
- WO 9623833 A
- WO 9851729 A
- WO 9912992 A
- DE 19513493 A
- DE 4316138 A
- EP 126471 A
- DE 10120801 A
- DE 19742342 A
- JP 7278246 A

**In der Beschreibung aufgeführte Nicht-Patentliteratur**

- *Z. Chemie,* 1977, vol. 17, 353-357
- *Z. CHEMIE,* 1979, vol. 19, 308
- Heteropoly- und Isopoly-oxamtalates. Springer, 1983